# EUROPÄISCHE PATENTSCHRIFT

(11) **EP 1 472 144 B1**
(45) Veröffentlichungstag und Bekanntmachung des Hinweises auf die Patenterteilung: **10.05.2006**
(21) Anmeldenummer: 03702553.3
(22) Anmeldetag: 29.01.2003
(51) Int. Cl.: B65B 61/18, B32B 37/06

(54) **VERFAHREN ZUR VERBESSERUNG DER HAFTUNG DER EINZELNEN SCHICHTEN EINES VERBUNDMATERIALS**
METHOD FOR IMPROVING ADHESION OF THE INDIVIDUAL LAYERS OF A COMPOSITE MATERIAL
PROCÉDÉ POUR AMÉLIORER L'ADHÉRENCE DES COUCHES INDIVIDUELLES D'UN MATÉRIAU COMPOSITE

(30) Priorität: 05.02.2002 DE 10204521
(43) Veröffentlichungstag der Anmeldung: 03.11.2004
(73) Patentinhaber: SIG Combibloc Systems GmbH, 52441 Linnich (DE)
(72) Erfinder: MAINZ, Hans-Willi, 52525 Heinsberg (DE)
(74) Vertreter: Cohausz & Florack
(86) Internationale Anmeldenummer: PCT/EP2003/000872
(87) Internationale Veröffentlichungsnummer: WO 2003/066446

(56) Entgegenhaltungen:
- EP-A- 0 911 265
- EP-A- 1 013 411
- US-A- 4 266 993
- US-A- 4 585 498

## Beschreibung

Die Erfindung betrifft ein Verfahren zur Verbesserung der Haftung der einzelnen Schichten eines Verbundmaterials aus kunststoffbeschichtetem Karton, insbesondere zur Herstellung von Getränke-/Lebensmittel- Verbundpackungen, wobei das Verbundmaterial ggf. eine Metallschicht aufweist und wobei des Verbundmaterial im Öffnungsbereich der späteren Packung erneut erhitzt.

Solche Mehrschichtverbundpackungen sind in vielfacher Ausfertigung bekannt, beispielsweise als Flachgiebelverbundpackungen. Sie finden vornehmlich auf dem Gebiet der Flüssigkeitsverpackung im Zusammenhang mit Kalt-, Kalt-Steril-, Heiß- und aseptischer Füllung Verwendung.

Um die Handhabung der zuvor näher beschriebenen Verbundpackungen zu verbessern und insbesondere deren Wiederverschließbarkeit zu erreichen, ist man mehr und mehr dazu übergegangen, die Verbundpackungen mit wiederverschließbaren Ausgießelementen zu versehen. Diese Ausgießer können ein- oder mehrteilig ausgeführt sein und weisen in der Regel ein Öffnungselement sowie einen Deckel auf. Heute sind nahezu ausschließlich solche Packungen mit wiederverschließbaren Ausgießelementen marktüblich.

Aus der EP 0 580 593 B1 ist beispielsweise eine Mehrschichtverbundpackung bekannt, die mit einem Ausgießelement versehen ist, welches zum erstmaligen Öffnen der Packung dient und zu seiner Wiederverschließbarkeit mit einem entsprechenden Verschlusselement ausgestattet ist. Dort ist im Bereich der Kartonschicht und äußeren PE-Schicht des Verbundmaterials der Packung eine Einkerbung zur Schwächung des Giebelmaterials vorgesehen, in die zum Öffnen der Packung ein mit dem Ausgießelement einstückig verbundenes Öffnungselement in das Packungsmaterial hineingedrückt wird.

Eine andere bekannte Mehrschichtverbundpackung mit Ausgießelement ist in der DE 197 27 996 C2 beschrieben. Dieses bekannte Ausgießelement weist ein Ausgießrohr auf, welches gleichzeitig als Öffnungselement zum Durchstoßen der Packungswandung dient. Ferner sind auch Packungen bekannt, die mit Ausgießelementen mit Schraubverschlüssen versehen sind.

Unabhängig davon, ob es sich bei den hierfür verwendeten Ausgießern um Schraubverschlüsse oder Klappverschlüsse handelt, muss vom Öffnungselement des Ausgießers zunächst die Packungswandlung durchstoßen werden. Um dies zu erleichtern, sind die in Rede stehenden Packungen im Öffnungsbereich mit einer Materialschwächung versehen, bei der ein Teil der Verbundschicht, nämlich die Kartonschicht und die äußere PE-Schicht durch eine Perforation oder Stanzung im Bereich der gewünschten Öffnungskontur zerstört worden sind.

Zum Durchstoßen der Packungswandung muss dann das Öffnungselement des Ausgießers nur noch die verbleibenden Schichten, in der Regel eine Sauerstoffsperrschicht (z.B. Al-Folie), und die innere (produktseitige) PE-Schicht durchstoßen. Zum vollflächigen Verbinden der Kartonschicht mit der A1-Folie dient eine dazwischen angeordnete Haftvermittler-Schicht. Während die Al-Folie beim Öffnen relativ schnell zerreißt, dehnt sich die innere PE-Schicht teilweise nicht unerheblich, bevor es zur gewünschten Zerstörung kommt. Da die Öffnungselemente der verwendeten Ausgießer jedoch nur eine definierte Eindringtiefe haben, hat man versucht, diesem Problem dadurch Rechnung zu tragen, dass die Öffnungselemente mit Schneiden od. dgl. versehen sind, um das Packungsmaterial besser durchstoßen zu können.

Des weiteren ist erkannt worden, dass ein erneutes Erhitzen im Öffnungsbereich der späteren Packung eine verbesserte Haftung zwischen der inneren PE-Schicht und der Karton- bzw. Al-Folienschicht eintritt. Dieses erneute Erhitzen geschieht beim Stand der Technik durch Beaufschlagung des entsprechenden Bereiches mit Heißluft. Dieser Heißluftstrom wird jedoch nur von oben mehr oder weniger gezielt in die Packung geblasen, so dass es hier zu keiner regelmäßigen und definierten Aktivierung kommt.

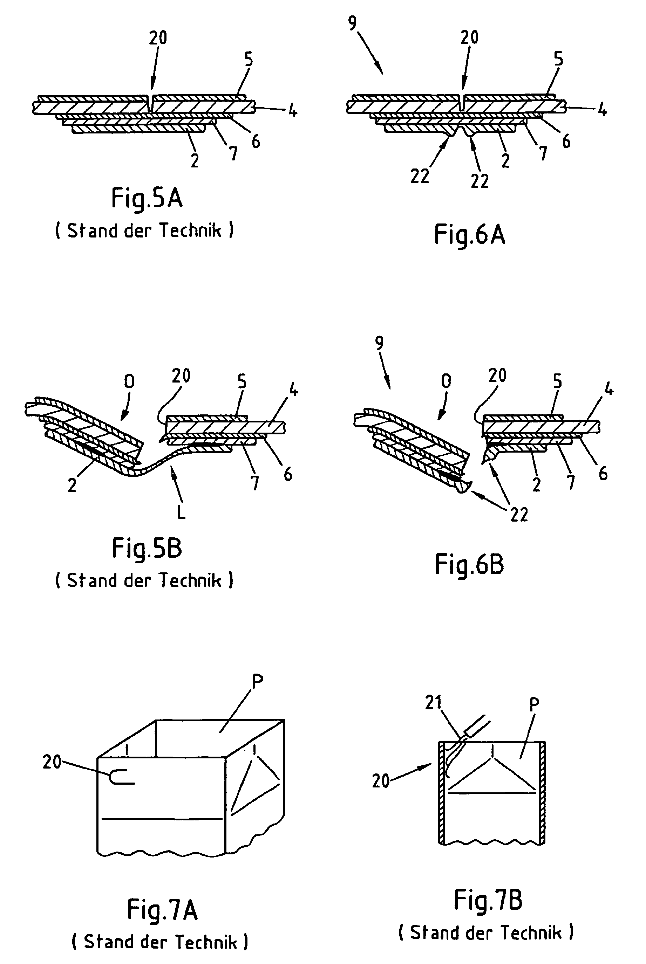

In Fig. 7A ist zum besseren Verständnis der Öffnungsbereich einer Packung schematisch dargestellt. Dabei ist eine Schwächungslinie 20 durch mechanische Zerstörung der äußeren PE-Schicht und des Trägermaterials im Bereich des aufzubringenden Ausgießelementes dargestellt. Zur Verbesserung der Haftung wird das Material in diesem Bereich punktuell mit Heißluft beaufschlagt, wie dies aus Fig. 7B hervorgeht, wo ein Heißluftstrahl 21 den Öffnungsbereich um die Schwächungslinie 20 mit Heißluft beaufschlagt.

Aufgrund verschiedenster Ursachen kann auf diese Weise keine reproduzierbare gute Aktivierung erfolgen Bei gleichen Voraussetzungen ist die Aktivierung erst mal zu stark oder zu gering, zu großflächig, im falschen Bereich usw. erfolgt. Dies führt dazu, dass bei nicht oder nur unzureichend aktivierten Bereichen sich die innere PE-Schicht im Trennbereich von der Karton- bzw. Al-Folienschicht abhebt und beim Öffnungsvorgang relativ stark gedehnt werden kann, ohne definiert aufzureißen.

Der Erfindung liegt daher die Aufgabe zugrunde, dass eingangs genannte Verfahren so auszugestalten und weiter zu bilden, dass die Haftung zwischen den einzelnen Schichten im Öffnungsbereich der späteren Packung so sehr verbessert wird, dass durch den Gebrauch der verwendeten Ausgießer eine definierte Zerstörung beim Durchstoßen der Packungswandung stattfindet.

Diese Aufgabe wird erfindungsgemäß durch das Verfahren gemäß Anspruch 1 gelöst.

Das Verbundmaterial wird durch eine definierte Energiezufuhr erneut erhitzt und durch das anschließende Zusammenpressen wenigstens im Bereich des späteren Ausgießers verdichtet. Der Grad dieser Verdichtung ist dabei so stark, dass ein sauberes Durchbrechen der Packungswandung gewährleistet ist, ohne dass es beim Öffnen zu einem Überdehnen der inneren PE-Schicht kommt. Man kann also beinahe mehr von einem "Brechen" des Materials sprechen als von einem "Zerreißen".

Erfindungsgemäß führt das gezielte und definierte Aktivieren des Öffnungsbereichs der späteren Packung dazu, dass eine intensive Verbindung zwischen Karton, Haftvermittler (HV), Al-Folie und innerer PE-Schicht im Öffnungsbereich entsteht. An den Berührungsstellen erfolgt durch das Erhitzen eine nochmalige Aufschmelzung und damit bessere Haftung. Durch die Anpressvorrichtung wird die - plastifizierte - innere PE-Schicht verdichtet und im Bereich der Öffnungskontur auf eine geringere Reststärke gebracht. Die "Reißstrecke" der PE-Schicht ist also erfindungsgemäß auf ein Mindestmaß reduziert worden. Aufgrund der verkürzten Strecke, in der sich die PE-Schicht dehnen kann, führt es zu einem schnelleren (definierten) Reißen dieser Schicht.

Die Erfindung hat also erkannt, dass das Verbundmaterial im Öffnungsbereich der späteren Packung durch eine definierte Energiezufuhr und das anschließende Zusammenpressen wenigstens im Bereich des späteren Ausgießers so stark verdichtet (= plastisch verformt) wird, dass ein sauberes Durchbrechen der Packungswandung gewährleistet ist, ohne dass es zu einem Überdehnen der inneren PE-Schicht kommt.

Nach einer weiteren Lehre der Erfindung erfolgt das erneute Erhitzen des noch bahnförmigen Verbundmaterials vor dem Aufbringen (Kaschieren) der inneren PE-Schicht. Dafür ist es zweckmäßig, dass die Nutzen auf der Verbundmaterialbahn quer angeordnet sind und dass das Erhitzen im Öffnungsbereich der späteren Packung streifenförmig erfolgt. Dies ist besonders zweckmäßig, denn, würde man die gesamte Bahn erhitzen, würde durch das höher temperierte PE eine Geschmacksbeeinträchtigung des in der Verbundpackung befindlichen Produktes eintreten.

Eine weitere Lehre der Erfindung sieht vor, dass das erneute Erhitzen des noch bahnförmigen Verbundmaterials nach dem Perforieren/Schwächen im Öffnungsbereich der späteren Packung erfolgt. Hierbei ist es besonders vorteilhaft, wenn das Zusammenpressen nur im Bereich der Perforation/Schwächungslinienkontur im Öffnungsbereich der späteren Packung erfolgt.

Erfindungsgemäß ist es möglich, dass das Erhitzen kontinuierlich oder nur abschnittsweise erfolgt. Dazu kann die Energiezufuhr beim Erhitzen - abgestimmt auf die Bahngeschwindigkeit und Beheizungslänge - getaktet erfolgen.

In weiterer Ausgestaltung der Erfindung ist es jedoch auch möglich, dass das erneute Erhitzen nach der Herstellung des Packungszuschnitts oder sogar erst nach der Packungsbildung erfolgt. Im letztgenannten Fall kann das Erhitzen auch erst in der Füllmaschine erfolgen, bzw. auf dem Dornrad der Füllmaschine während der Packungsbildung oder aber mittels einer separaten Aktiviereinheit unmittelbar vor der Sterilisationseinheit der Füllmaschine.

Nach einer weiteren Lehre der Erfindung wird das Verbundmaterial um eine Temperatur ΔT von 40°C bis 140°C erhöht, was aufgrund der nur auf den Öffnungsbereich der späteren Packung begrenzten Umfang nicht zu Geschmacksbeeinträchtigungen beim Produkt führt. Die Höhe der tatsächlich aufzubringenden Temperatur ist von vielen unterschiedlichen Faktoren abhängig, wie beispielsweise vom jeweiligen Erhitzungsort, der Art und Dicke der Schichtfolge des Verbundes, von der Ist-Temperatur des zu erwärmenden Bereichs des Verbundmaterials, der Bahngeschwindigkeit, Temperatur der Umgebung etc.. Wenn beispielsweise bei einem Al-Folien enthaltenden Verbund auch die Haftvermittlerschicht zwischen Trägermaterial aus Polyethylen (PE) besteht, dann muss beim Erhitzen des Bereichs um die spätere Öffnung wenigstens der Schmelzpunkt von PE, der bei etwa 110°C liegt, erreicht werden, um ein Erweichen der Schichten zu erreichen. Nur so kann beim nachfolgenden Verpressen eine plastische Verformung erreicht werden.

Je nach dem, ob das verwendete Verbundmaterial eine Metallschicht enthält oder nicht, wird zum Erhitzen alternativ eine Hochfrequenzspule (nur bei metallhaltigen Verbunden) oder eine Ultraschallschweißeinheit bzw. Infraroteinheit (bei metallfreien oder metallhaltigen Verbunden) eingesetzt. Werden keine bei der Herstellung des Verbundmaterials bzw. der Verbundpackungen ohnehin verwendeten Werkzeuge zum Zusammenpressen der Schichten verwendet, sieht eine weitere Lehre der Erfindung vor, dass eine separate Behandlungseinheit sowohl mit Einrichtungen zum erneuten Erhitzen als auch mit Einrichtungen zum Zusammenpressen vorgesehen ist. Es ist jedoch auch möglich, vorhandene Rotationswerkzeuge wie bzw. Rillwerkzeuge oder Rotationsstanzen mit entsprechenden Andruckvorrichtungen zu versehen, welche der Kontur der Öffnung der späteren Packung angepasst sind.

Erfolgt das Erhitzen und Zusammenpressen des Verbundmaterials erst in der Füllmaschine, also intermittierend, kann hierfür eine ggf. freie Station im Dornrad verwendet werden oder aber durch eine separate Behandlungseinheit unmittelbar vor der Sterilisiereinheit vorgesehen sein.

Die Erfindung wird nachfolgend anhand einer lediglich bevorzugte Ausführungsbeispiele darstellenden Zeichnung näher erläutert. In der Zeichnung zeigen
- Fig. 1: ein erstes Ausführungsbeispiel der Erfindung, schematisch im Querschnitt,
- Fig. 2: das Ausführungsbeispiel aus Fig.1, schematisch in Draufsicht,
- Fig. 3: ein zweites Ausführungsbeispiel der Erfindung, schematisch im Querschnitt,
- Fig. 4A: ein weiteres Ausführungsbeispiel der Erfindung, schematisch im Querschnitt,
- Fig. 4B: das Ausführungsbeispiel aus Fig. 4a in Funktionsansicht,
- Fig. 5A: einen Querschnitt des konventionellen Verbundmaterials im Öffnungsbereich der späteren Packung,
- Fig. 5B: das konventionelles Verbundmaterial aus Fig. 5A in geöffnetem Zustand,
- Fig. 6A: einen Querschnitt des erfindungsgemäßen Verbundmaterials im Öffnungsbereich der späteren Packung,
- Fig. 6B: das erfindungsgemäße Verbundmaterial aus Fig. 6A in geöffnetem Zustand,
- Fig. 7A: die Lage des Öffnungsbereiches der späteren Packung in perspektivischer Ansicht und
- Fig. 7B: die konventionelle Aufschmelzung des Bereichs der späteren Öffnung, schematisch im Querschnitt.

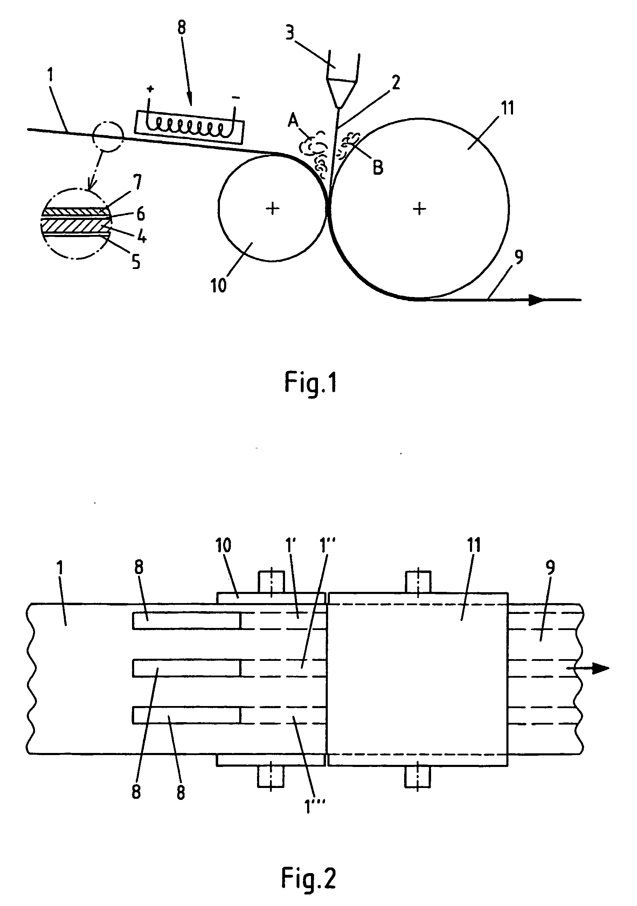

Bei dem in Fig. 1 dargestellten ersten Ausführungsbeispiel der Erfindung erfolgt das erneute Erhitzen einer Verbundmaterialbahn 1 noch vor dem Aufbringen der inneren PE-Schicht 2 durch einen Extruder 3. Die Verbundmaterialbahn 1 besteht dabei aus einer Kartonschicht 4 als Trägermaterial, auf die bereits eine äußere PE-Schicht 5 und in Verbindung einer Haftvermittlerschicht 6 eine Al-Folie 7 aufkaschiert worden sind. Der Verbund 1 wird dabei mittels einer zusätzlichen Aktiviereinheit, im dargestellten und in soweit bevorzugten Ausführungsbeispiel einer Hochfrequenzspule 8, auf ein höheres Temperaturnineau gebracht. Dies führt zunächst zu einem Erweichen der zwischen der Kartonschicht 4 und der Al-Folie 7 befindlichen Haftvermittlerschicht 6 und hat gleichzeitig den Vorteil, dass sich auf dem erwärmten Aluminium beim anschließenden Aufkaschieren der inneren PE-Schicht 2 weniger Dampf A niederschlägt. Die Bildung von kondensierendem Dampf A, B beiderseits des noch flüssigen PE-Films 2 lässt sich nie vollständig vermeiden. Aufgrund der Vorerwärmung durch die Hochfrequenzspule 8 und des dadurch bedingten geringeren Niederschlags von Dampf A erfolgt eine bessere Haftung des "fertigen" Verbundmaterials 9.

Aus Fig. 2, in der die Anordnung aus Fig. 1 in Draufsicht schematisch dargestellt ist, sieht man die Andruckwalze 10 und die Kühlwalze 11 ohne die darüber befindliche Extrudereinheit. Aus Fig. 2 geht deutlich hervor, dass nicht die gesamte Verbundmaterialbahn 1, sondern nur streifenförmige Abschnitte 1' , 1'', 1''' durch im dargestellten Ausführungsbeispiel drei Hochfrequenzspulen 8 erhitzt werden. Zweckmäßigerweise sind die nicht dargestellten Nutzen der späteren Packungen quer auf der Verbundmaterialbahn 1 angeordnet und befinden sich die Hochfrequenzspulen 8 im Bereich der späteren Öffnungen.

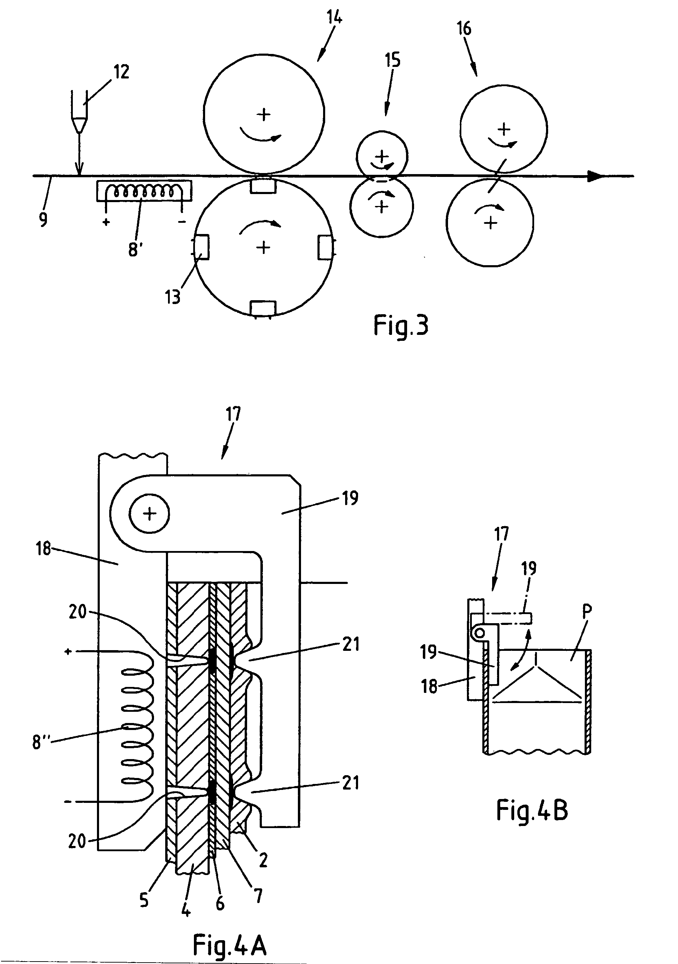

Eine weitere mögliche erfindungsgemäße Ausgestaltung ist in Fig. 3 dargestellt. Bei dieser Ausgestaltung sind die Hochfrequenzspulen 8' erst nach dem Perforieren/Schwächen im Öffnungsbereich der späteren Packung unterhalb der Verbundmaterialbahn 9 angeordnet. Das Aufbringen der Schwächungslinie kann beispielsweise mittels eines Lasers 12 erfolgen. Bei dieser alternativen Ausgestaltung werden die erneut erhitzten streifenförmigen Abschnitte durch entsprechende Andruckelemente 13 in einem Rillwerkzeug 14, welches vor der Längsschneideeinrichtung 15 und er Querschneideeinrichtung 16 angeordnet ist, verdichtet. Die Andruckelemente 13 können dabei eine Form haben, die exakt auf die spätere Öffnungskontur abgestimmt sind.

Während zuvor kontinuierliche Verfahren zum erneuten Erhitzen beschrieben worden sind, werden von der vorliegenden Erfindung auch intermittierende Verfahren behandelt. In den Fig. 4A und 4B ist eine Verfahrensweise gezeigt, bei der das erneute Erhitzen erst nach der Packungsbildung, nämlich in der Füllmaschine unmittelbar vor der Sterilisationseinheit erfolgt.

Fig. 4A zeigt eine Verpresszange 17, in deren Grundkörper 18 eine Aktiviereinheit, schematisch dargestellt als Hochfrequenzspule 8'' enthalten ist. Ein schwenkbar angeordneter Verpressbügel 19 ist so auf die spätere Öffnungskontur abgestimmt, dass das erneute definierte Erhitzen und anschließende Verdichten konturgenau im Bereich der Schwächungslinie 20 stattfindet. Entsprechend gestaltete Stege 21 verdichten beim Eingriff insbesondere die innere PE-Schicht 2 derart, dass ein Überdehnen beim späteren Öffnungsvorgang zuverlässig ausgeschlossen ist.

In Fig. 4B ist schematisch noch die Funktion der Verpresszange 17 dargestellt. Diese wird von oben oder von der Seite mit dem Öffnungsbereich einer Packung P in Deckung gebracht, wobei anschließend eine Aktivierung dieser Zone mittels der hier nicht mehr dargestellten Hochfrequenzspule erfolgt und der Verpressbügel 19 aus seiner strichpunktiert dargestellten Ruhelage in die dargestellte verpressstellung geschwenkt wird.

Zur besseren Verdeutlichung der Erfindung ist in den Fig. 5 und 6 noch einmal der Vergleich von erfindungsgemäßem mit konventionellem Mehrschichtverbundmaterial dargestellt.

Zunächst zeigt Fig. 5A schematisch einen Querschnitt des konventionellen Verbundmaterials im Öffnungsbereich der späteren Packung, wie an der Schwächungslinie 20 erkennbar. Der konventionelle Öffnungsvorgang ist danach in Fig. 5B dargestellt. Im Bereich der Schwächungslinie 20 wird beim Eindrücken des Verbundmaterials in Richtung des Pfeils O zwar die Aluminiumschicht 7 ohne weiteres zerstört, die innere PE-Schicht 2 längt sich jedoch erheblich, bevor es zu einer Zerstörung kommt. Die mangelhafte Haftung zwischen der Al-Folie 7 und der inneren PE-Schicht 2 führt zu einem Ablösen beider Schichten nahe der Schwächungslinie 20 beim Öffnungsvorgang, wie mit dem Pfeil L dargestellt ist. Im Extremfall kann es dazu führen, dass das Öffnungselement des nicht dargestellten Ausgießers nicht in der Lage ist, eine ausreichend große Gießöffnung freizulegen.

In Fig. 6A ist Verbundmaterial 9 dargestellt, das im Öffnungsbereich der Packung nach dem erfindungsgemäßen Verfahren vorbehandelt worden ist. Es ist deutlich zu erkennen, dass die innere PE-Schicht 2 im Bereich unterhalb der Schwächungslinie 20 so stark verformt ist, dass sich zwei Verdickungen 22 gebildet haben. In Fig. 6B ist schließlich dargestellt, dass beim erfindungsgemäßen Verbundmaterial ein definiertes Aufreißen aller Schichten unterhalb der Schwächungslinie 20 nach Beaufschlagung mit der Öffnungskraft O erfolgt. Eine Überdehnung der inneren PE-Schicht 2 ist daher zuverlässig ausgeschlossen.

## Patentansprüche

1. Verfahren zur Verbesserung der Haftung der einzelnen Schichten eines Verbundmaterials (1) aus kunststoffbeschichtetem Karton (4), insbesondere zur Herstellung von Getränke-/Lebensmittel-Verbundpackungen, wobei das Verbundmaterial ggf. eine Metallschicht (7) aufweist und wobei das Verbundmaterial im Öffnungsbereich der späteren Packung (P) erneut erhitzt wird,
**dadurch gekennzeichnet, dass**
das Verbundmaterial (1) durch definierte Energiezufuhr erneut erhitzt und durch anschließendes Zusammenpressen wenigstens im Öffnungsbereich der späteren Packung (P) verdichtet wird.

2. Verfahren nach Anspruch 1,
**dadurch gekennzeichnet, dass**
das erneute Erhitzen des noch bahnförmigen Verbundmaterials (1) vor dem Aufbringen (Kaschieren) der inneren PE-Schicht (2) erfolgt.

3. Verfahren nach Anspruch 2,
**dadurch gekennzeichnet, dass**
die Nutzen auf der Verbundmaterialbahn quer angeordnet sind und dass das Erhitzen im Öffnungsbereich der späteren Packung streifenförmig erfolgt.

4. Verfahren nach Anspruch 2,
**dadurch gekennzeichnet, dass**
die Nutzen auf der Verbundmaterialbahn längs angeordnet sind und dass das Erhitzen im Öffnungsbereich der späteren Packung abschnittsweise erfolgt.

5. Verfahren nach Anspruch 1,
**dadurch gekennzeichnet, dass**
das erneute Erhitzen des noch bahnförmigen Verbundmaterials nach dem Perforieren/Schwächen im Öffnungsbereich der späteren Packung erfolgt.

6. Verfahren nach Anspruch 5,
**dadurch gekennzeichnet, dass**
das Zusammenpressen nur im Bereich der Perforation/Schwächungslinienkontur im Öffnungsbereich der späteren Packung erfolgt.

7. Verfahren nach einem der Ansprüche 1 bis 6,
**dadurch gekennzeichnet, dass**
das Erhitzen kontinuierlich erfolgt.

8. Verfahren nach einem der Ansprüche 1 bis 6,
**dadurch gekennzeichnet, dass**
das Erhitzen abschnittsweise erfolgt.

9. Verfahren nach Anspruch 1,
**dadurch gekennzeichnet, dass**
das erneute Erhitzen nach der Herstellung des Packungszuschnitts erfolgt.

10. Verfahren nach Anspruch 1,
**dadurch gekennzeichnet, dass**
das erneute Erhitzen in der Füllmaschine erfolgt.

11. Verfahren nach Anspruch 10,
**dadurch gekennzeichnet, dass**
das erneute Erhitzen auf dem Dornrad der Füllmaschine erfolgt.

12. Verfahren nach Anspruch 10,
**dadurch gekennzeichnet, dass**
das erneute Erhitzen vor der Sterilisationseinheit der Füllmaschine erfolgt.

13. Verfahren nach einem der Ansprüche 1 bis 12,
**dadurch gekennzeichnet, dass**
das Verbundmaterial im Öffnungsbereich der späteren Packung um eine Temperatur ΔT von 40°C bis 140°C erhöht wird.

## Claims

1. A method for improving the adhesion of the individual layers of a composite material (1) made of plastic-coated cardboard (4), in particular for the manufacture of beverages-/foodstuffs composite packages, the composite material having a metal layer (7), if necessary, and the composite material being reheated in the opening region of the future package (P), **characterised in that** the composite material (1) is reheated by a defined energy supply and is compacted by subsequent pressing together at least in the opening region of the future package (P).

2. The method according to claim 1, **characterised in that** the reheating of the still sheet-like composite material (1) takes place before the application (lamination) of the inner polyethylene layer (2).

3. The method according to claim 2, **characterised in that** the blanks are arranged transversely on the composite material sheet and **in that** the heating takes place in strips in the opening region of the future package.

4. The method according to claim 2, **characterised in that** the blanks are arranged longitudinally on the composite material sheet and **in that** the heating takes place in sections in the opening region of the future package.

5. The method according to claim 1, **characterised in that** the reheating of the still sheet-like composite material takes place after perforation/weakening in the opening region of the future package.

6. The method according to claim 5, **characterised in that** the pressing together only takes place in the region of the perforation/line-of-weakening contour in the opening region of the future package.

7. The method according to any one of claims 1 to 6, **characterised in that** the heating takes place continuously.

8. The method according to any one of claims 1 to 6, **characterised in that** heating takes place in sections.

9. The method according to claim 1, **characterised in that** the reheating takes place after manufacture of the package blank.

10. The method according to claim 1, **characterised in that** the reheating takes place in the filling machine.

11. The method according to claim 10, **characterised in that** the reheating takes place on the mandrel wheel of the filling machine.

12. The method according to claim 10, **characterised in that** the reheating takes place before the sterilising unit of the filling machine.

13. The method according to any one of claims 1 to 12, **characterised in that** the composite material is heated by a temperature ΔT of 40° C to 140° C in the opening region of the future package.

## Revendications

1. Procédé d'amélioration de l'adhérence des couches individuelles d'un matériau composite (1) à base de carton (4) couché de matières synthétiques, notamment destiné à la fabrication d'emballages composites pour boissons et/ou denrées alimentaires, où le matériau composite comprend éventuellement une couche métallique (7), et où le matériau composite est soumis à un chauffage renouvelé, au niveau de la zone d'ouverture de ce qui sera plus tard l'emballage (P),
**caractérisé en ce que** le matériau composite (1) est soumis à un chauffage renouvelé, avec un apport défini d'énergie, et est ensuite comprimé au moins au niveau de la zone d'ouverture de ce qui sera plus tard l'emballage (P) par une action de compactage.

2. Procédé selon la revendication 1, **caractérisé en ce qu'**on effectue le chauffage renouvelé du matériau composite (1) encore à l'état de bande, préalablement à l'application (le laminage) d'une couche intérieure (2) de PE.

3. Procédé selon la revendication 2, **caractérisé en ce que** les rainures sont disposées transversalement sur la bande de matériau composite, et **en ce que** le chauffage effectué au niveau de la zone d'ouverture de ce qui sera plus tard l'emballage se fait par stries.

4. Procédé selon la revendication 2, **caractérisé en ce que** les rainures sont disposées longitudinalement sur la bande de matériau composite, et **en ce que** le chauffage effectué au niveau de la zone d'ouverture de ce qui sera plus tard femballage se fait par tronçons.

5. Procédé selon la revendication 1, **caractérisé en ce que** le chauffage renouvelé du matériau composite encore à l'état de bande se fait après perforation/affaiblissement au niveau de la zone d'ouverture de ce qui sera plus tard l'emballage.

6. Procédé selon la revendication 5, **caractérisé en ce que** la compression se fait uniquement au niveau des contours de la perforation/ de la ligne d'affaiblissement dans la zone d'ouverture de ce qui sera plus tard l'emballage.

7. Procédé selon l'une des revendications 1 à 6, **caractérisé en ce que** le chauffage se fait de façon continue.

8. Procédé selon l'une des revendications 1 à 6, **caractérisé en ce que** le chauffage se fait par tronçons.

9. Procédé selon la revendication 1, **caractérisé en ce que** le chauffage renouvelé se fait après la finition de la découpe de l'emballage.

10. Procédé selon la revendication 1, **caractérisé en ce que** le chauffage renouvelé se fait dans la machine de remplissage.

11. Procédé selon la revendication 10, **caractérisé en ce que** le chauffage renouvelé se fait sur la roue à picots de la machine de remplissage.

12. Procédé selon la revendication 10, **caractérisé en ce que** le chauffage renouvelé se fait en amont du train de stérilisation de la machine de remplissage.

13. Procédé selon l'une des revendications 1 à 12, **caractérisé en ce que** le matériau composite est soumis, au niveau de la zone d'ouverture de ce qui sera plus tard l'emballage, une augmentation de température ΔT de 40°C à 140°C.
